(19) Europäisches Patentamt
European Patent Office
Office européen des brevets

(11) Veröffentlichungsnummer: **0 193 893**
**B1**

(12) **EUROPÄISCHE PATENTSCHRIFT**

(45) Veröffentlichungstag der Patentschrift: **26.04.89**

(51) Int. Cl.[4]: **C09B 45/24**

(21) Anmeldenummer: **86102622.7**

(22) Anmeldetag: **28.02.86**

(54) **Disazofarbstoffe.**

(30) Priorität: **06.03.85 DE 3507833**

(43) Veröffentlichungstag der Anmeldung: **10.09.86 Patentblatt 86/37**

(45) Bekanntmachung des Hinweises auf die Patenterteilung: **26.04.89 Patentblatt 89/17**

(84) Benannte Vertragsstaaten: **BE CH DE FR GB IT LI NL**

(56) Entgegenhaltungen:
**EP-A- 0 091 020**
**US-A- 2 136 650**
**US-A- 2 200 445**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch-Strasse 38, D-6700 Ludwigshafen(DE)**

(72) Erfinder: **Hansen, Guenter, Dr., Alwin-Mittasch-Platz 8, D-6700 Ludwigshafen(DE)**
Erfinder: **Bergmann, Udo, Dr., Merckstrasse 26, D-6100 Darmstadt(DE)**
Erfinder: **Zeidler, Georg, Mutterstadter Strasse 7, D-6701 Dannstadt-Schauernheim(DE)**

**EP 0 193 893 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Fe-, Co- oder Cr-Komplexe von Verbindungen, die in Form der freien Säuren der allgemeinen Formel I

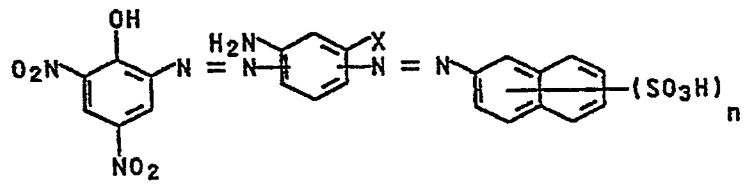

I

entsprechen, in der X Amino oder Hydroxy und n 1 sind.

Einzelne Naphthalinsulfosäure-Diazokomponenten sind z.B. die 2-Amino-1-, -4-, -5-, -6-, -7- oder -8-naphthalinsulfosäure.

Die Sulfogruppe steht bevorzugt in der 5- oder insbesondere 6-Stellung.

Weiterhin sind die Co- und Fe-Komplexe bevorzugt sowie die Komplexe mit X = $NH_2$.

Zur Herstellung kann man z.B. die metallfreien Verbindungen der Formel I nach an sich bekannten Methoden metallisieren. Die metallfreien Verbindungen der Formel I werden wie üblich durch Diazotierung und Kupplung hergestellt.

Die Verbindung der Formel I eignen sich insbesondere zum Färben von Leder. Man erhält tiefe Färbungen mit sehr guten Echtheiten, von denen die Lichtechtheiten besonders zu erwähnen sind.

Aus der US-A 2 200 445 ist bereits der Chromkomplex einer ähnlichen Verbindung bekannt. Die Naphthalindiazokomponente ist dort 2-Aminonaphthalin-6, 8-disulfonsäure.

Die US-A 2 136 650 beschreibt einen ähnlichen Chromkomplex, der Resorcin als Kupplungskomponente aufweist.

Schließlich ist in der EP-A 91 020 ein ähnlicher Eisenkomplex beschrieben, der 1-Aminonaphthalin-6-sulfonsäure als Naphthalindiazokomponente aufweist.

Es hat sich jedoch gezeigt, daß die Farbstoffe des Standes der Technik anwendungstechnische Mängel, insbesondere eine ungenügende Lichtechtheit aufweisen.

In den folgenden Beispielen beziehen sich Angaben über Teile und Prozente, sofern nicht anders vermerkt, auf das Gewicht.

Beispiel 1

19,9 Teile 1-Amino-2-hydroxy-3,5-dinitro-benzol werden in der üblichen Weise diazotiert und in essigsaurer Lösung auf 11 Teile m-Phenylendiamin gekuppelt. Anschließend fügt man zu der Suspension bei pH 8–9 das Diazoniumsalz aus 24,5 Teilen 2-Naphthylamin-6-sulfonsäure hinzu. Nach beendeter Kupplung wird das Reaktionsgemisch mit Essigsäure auf pH 5 eingestellt, mit 38 Teilen wasserfreiem Eisen-IIIchlorid versetzt und bei pH 4–5 ungefähr 3 Stunden auf ca. 80°C erhitzt.

Nach erfolgter Metallisierung wird der Farbstoff isoliert und getrocknet. Der Eisenkomplex der Verbindung der Formel

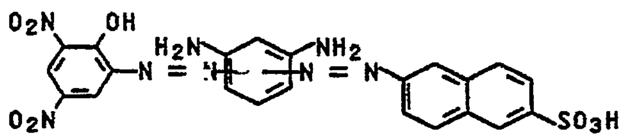

färbt Leder in licht- und naßechten gelbstichig braunen Tönen.

Beispiel 2

19,9 Teile 1-Amino-2-hydroxy-3,5-dinitro-benzol werden in der üblichen Weise diazotiert und in essigsaurer Lösung auf 11 Teile m-Phenylendiamin gekuppelt. Anschließend fügt man zu der Suspension bei pH 8–9 das Diazoniumsalz aus 24,5 Teilen 2-Naphthylamin-5-sulfonsäure hinzu. Nach beendeter Kupplung wird das Reaktionsgemisch mit Essigsäure auf pH 5 eingestellt, mit 12 Teilen $CoCl_2.6H_2O$ versetzt und bei pH 4–5 ungefähr 1 Stunde auf ca. 80°C erhitzt.

Nach erfolgter Metallisierung wird der Farbstoff isoliert und getrocknet. Der Kobaltkomplex der Verbindung der Formel

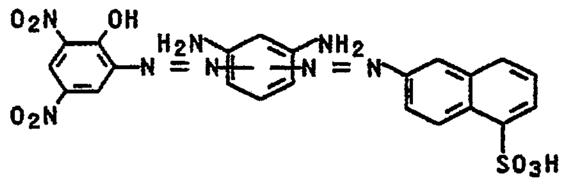

färbt Leder in licht- und naßechten rotstichig braunen Tönen.

Beispiel 3

22,3 Teile 2-Naphthylamin-6-sulfosäure werden in der üblichen Weise diazotiert und in essigsaurer Lösung auf 11 Teile m-Aminophenol gekuppelt. Anschließend fügt man zu der Suspension bei pH 10 das Diazoniumsalz aus 19,9 Teilen 1-Amino-2-hydroxy-3,5-dinitro-benzol hinzu. Nach beendeter Kupplung wird das Reaktionsgemisch mit Essigsäure auf pH 5 gestellt, mit 26,6 Teilen $CrCl_3.6H_2O$ versetzt und bei pH 4 ungefähr 8 Stunden zum Sieden erhitzt.

Nach erfolgter Metallisierung wird der Farbstoff isoliert und getrocknet. Der Chromkomplex der Verbindung der Formel

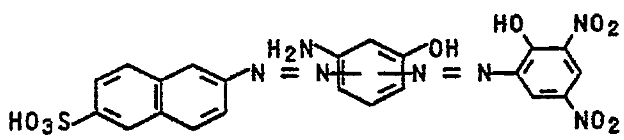

färbt Leder in licht- und naßechten rotstichig braunen Tönen.

Die in der folgenden Tabelle genannten Farbstoffe lassen sich analog den vorher genannten Vorschriften synthetisieren.

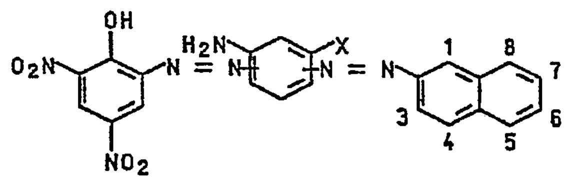

| Beispiel | X | Stellung der $SO_3H$-Gruppen | Me | Farbton |
|---|---|---|---|---|
| 4 | OH | 1 | Fe | gelb-braun |
| 5 | OH | 4 | Fe | gelb-braun |
| 6 | OH | 5 | Fe | gelb-braun |
| 7 | OH | 6 | Co | rot-braun |
| 8 | OH | 7 | Cr | rot-braun |
| 9 | OH | 8 | Cr | rot-braun |
| 10 | OH | 6 | Fe | gelb-braun |
| 11 | $NH_2$ | 4 | Fe | gelb-braun |
| 12 | $NH_2$ | 5 | Fe | gelb-braun |
| 13 | $NH_2$ | 6 | Co | rotbraun |
| 14 | $NH_2$ | 7 | Cr | braun |

**Patentansprüche**

1. Fe-, Co- oder Cr-Komplexe von Verbindungen, die in Form der freien Säuren der allgemeinen Formel I

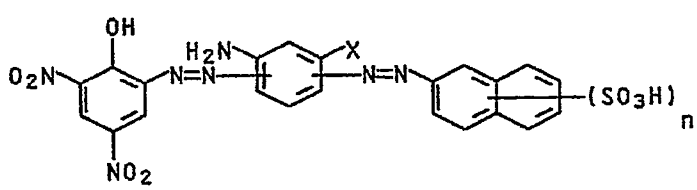

I

entsprechen, in der X Amino oder Hydroxy und n 1 sind.

2. Verbindungen gemäß Anspruch 1, bei denen die Sulfogruppe in 6-Stellung steht.

3. Fe-Komplexe gemäß Anspruch 1.

4. Co-Komplexe gemäß Anspruch 1.

5. Verwendung der Verbindungen gemäß Anspruch 1 zum Färben von Leder.

## Claims

1. An Fe, Co or Cr complex of a compound which, in the form of the free acid, is of the formula I

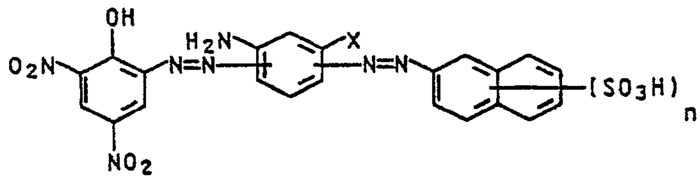

I

where X is amino or hydroxyl and n is 1.

2. A compound as set forth in claim 1, wherein the sulfo group is in the 6-position.
3. An Fe complex as claimed in claim 1.
4. A Co complex as claimed in claim 1.
5. Use of the compound as set forth in claim 1 for dyeing leather.

## Revendications

1. Complexes de Fe, Co ou Cr de composés qui ont sous forme d'acide libre la formule générale I

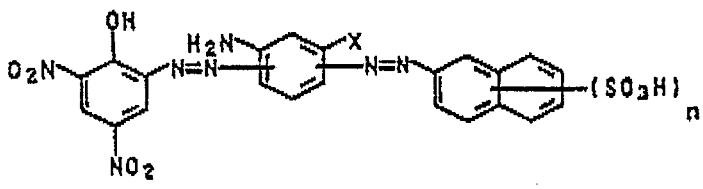

I

dans laquelle X est un groupement amino ou hydroxy et n vaut 1.

2. Composés selon la revendication 1, dans lesquels le groupement sulfo est en position 6.
3. Complexes de Fe selon la revendication 1.
4. Complexes de Co selon la revendication 1.
5. Utilisation des composés selon la revendication 1 pour teindre le cuir.